# EUROPEAN PATENT APPLICATION

(11) **EP 4 811 265 A1**
(43) Date of publication of application: **23.09.2026**
(21) Application number: 24891250.3
(22) Date of filing: 01.11.2024
(51) Int. Cl.: G06Q 50/10

(54) **INFORMATION PROCESSING DEVICE, INFORMATION PROCESSING METHOD, AND INFORMATION PROCESSING PROGRAM**

(30) Priority: 17.11.2023 JP 2023195930
(71) Applicant: Sony Group Corporation, Tokyo 108-0075 (JP)
(72) Inventor: ANZUI, Shintaro, Tokyo 108-0075 (JP); QI, Xiaodong, Tokyo 108-0075 (JP); KOBASHI, Wataru, Tokyo 108-0075 (JP); MARUYAMA, Yutaro, Tokyo 108-0075 (JP); HIRANO, Yuki, Tokyo 108-0075 (JP)
(74) Representative: D Young & Co LLP
(86) International application number: PCT/JP2024/039020
(87) International publication number: WO 2025/105211

(57) **Abstract**

An information processing apparatus includes: an acquisition unit that acquires encrypted device data of a device used by a user and, acquires from a first provider an encrypted first conversion rule for converting the device data according to a first rule; a generation unit that generates encrypted first conversion data, based on the acquired device data and the acquired first conversion rule; and a management unit that associates the generated first conversion data with the user and the first provider and manages use and a fee of the first conversion data.

## Description

### Technical Field

The present disclosure relates to an information processing apparatus, an information processing method, and an information processing program.

### Background Art

PTL 1 describes that a data provider transmits and deposits data that the data provider owns or data related to the data provider to a data processing apparatus in an information bank/information safe. PTL 1 also describes that a data provider can determine a state of data to be provided to a data user, a stage of a provision level, and whether the data can be provided from deposited data, and can receive an incentive according to provision of the data to the data user.

### Citation List

### Patent Literature

PTL 1: JP 2020-190797 A

### Summary

### Technical Problem

However, in the known technique described above, data acquisition and conversion are not performed while keeping the data and a conversion rule concealed, making it difficult to combine user's device data and the conversion rule in a confidential state and utilize the combined user's device data and the conversion rule as a personal information asset.

Therefore, the present disclosure proposes an information processing apparatus, an information processing method, and an information processing program that can combine user's device data and a conversion rule in a confidential state and utilize the combined user's device data and the conversion rule as a personal information asset.

### Solution to Problem

An information processing apparatus according to an aspect of the present disclosure includes: an acquisition unit configured to acquire encrypted device data of a device used by a user, and acquire from a first provider an encrypted first conversion rule for converting the device data according to a first rule; a generation unit configured to generate encrypted first conversion data, based on the acquired device data and the acquired first conversion rule; and a management unit configured to associate the generated first conversion data with the user and the first provider, and manage use and a fee of the first conversion data.

### Brief Description of Drawings

[Fig. 1]

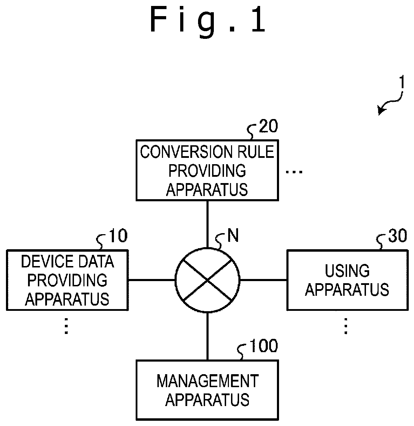

   Fig. 1 is a diagram illustrating an example of a configuration of an information processing system according to an embodiment of the present disclosure.
[Fig. 2]

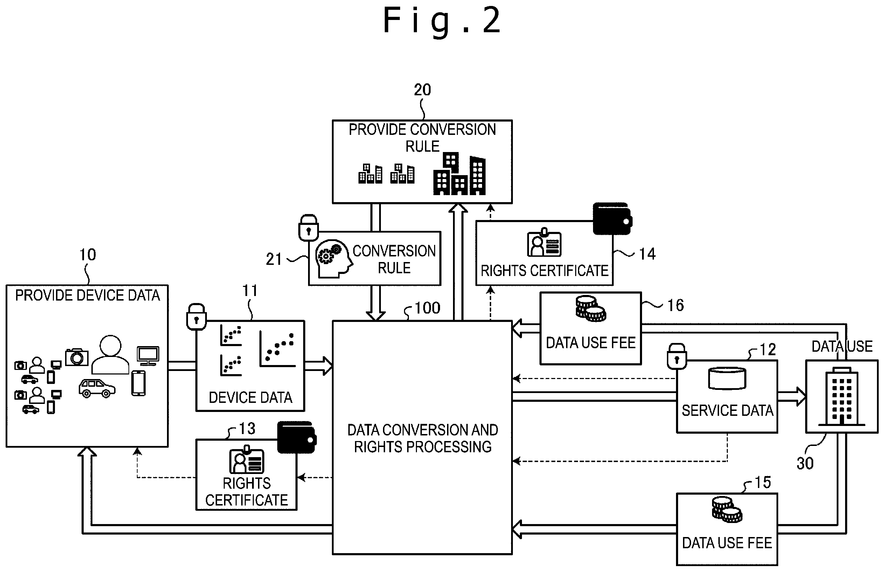

   Fig. 2 is a diagram illustrating an example of a data flow according to the embodiment of the present disclosure.
[Fig. 3]

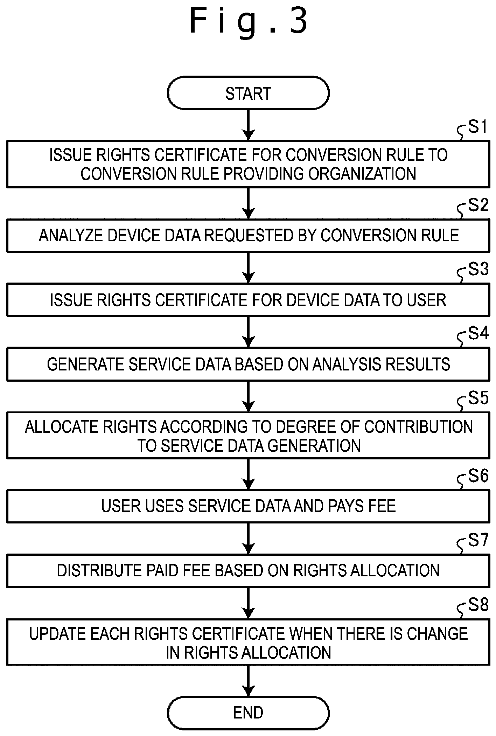

   Fig. 3 is a flowchart illustrating an example of rights management processing according to the embodiment of the present disclosure.
[Fig. 4]

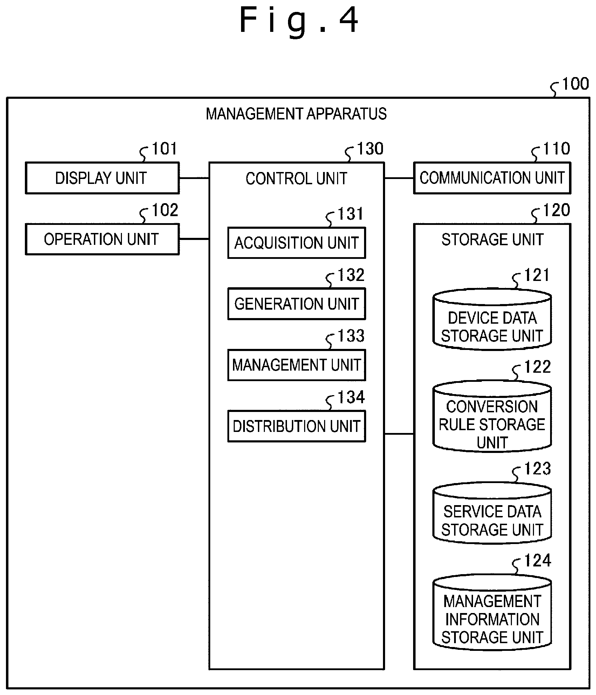

   Fig. 4 is a block diagram illustrating an example of a functional configuration of a management apparatus according to the embodiment of the present disclosure.
[Fig. 5]

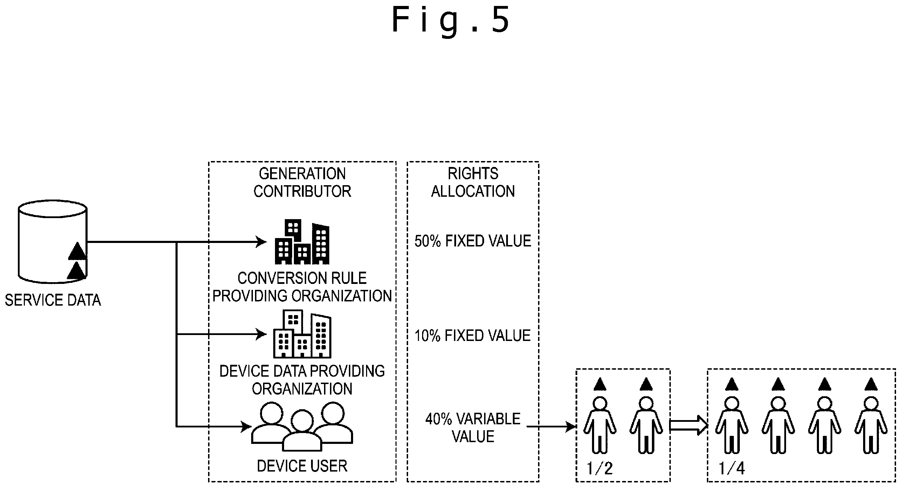

   Fig. 5 is a diagram illustrating an example of rights allocation to generation contributors.
[Fig. 6]

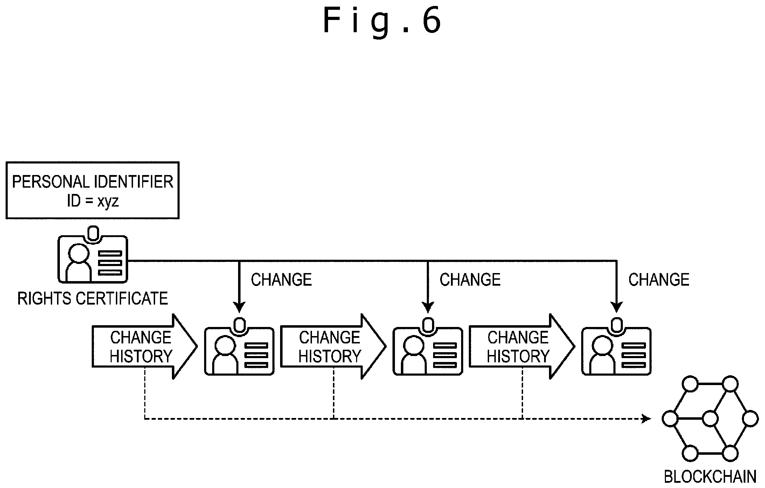

   Fig. 6 is a diagram illustrating an example of management of a change history of a rights certificate.
[Fig. 7]

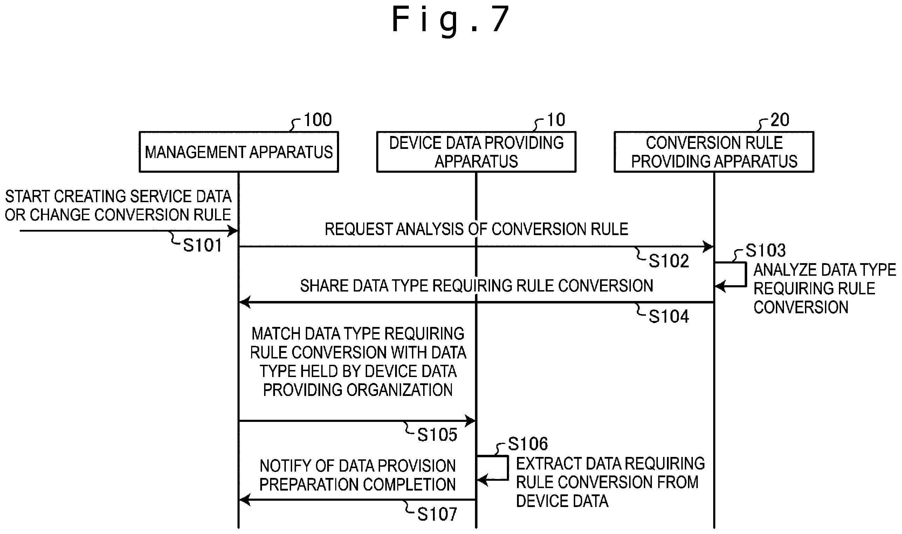

   Fig. 7 is a sequence diagram illustrating an example of processing for combining a conversion rule according to the embodiment of the present disclosure.
[Fig. 8]

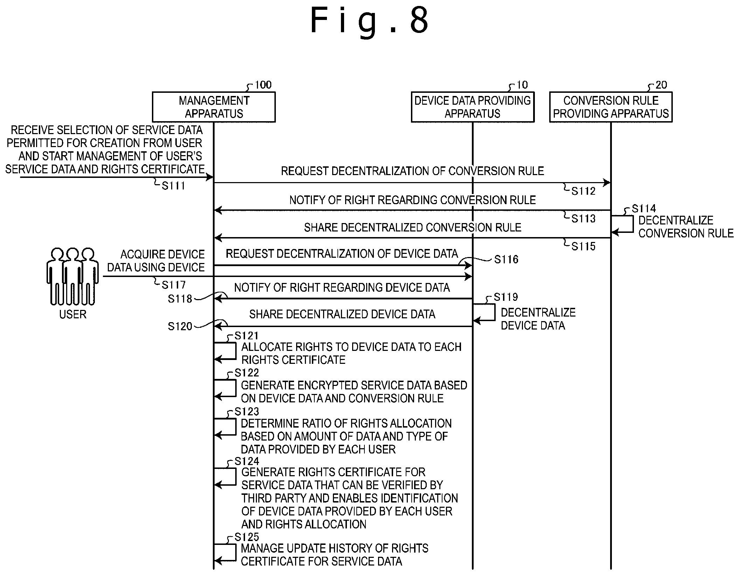

   Fig. 8 is a sequence diagram illustrating an example of processing for generating service data and a rights certificate according to the embodiment of the present disclosure.
[Fig. 9]

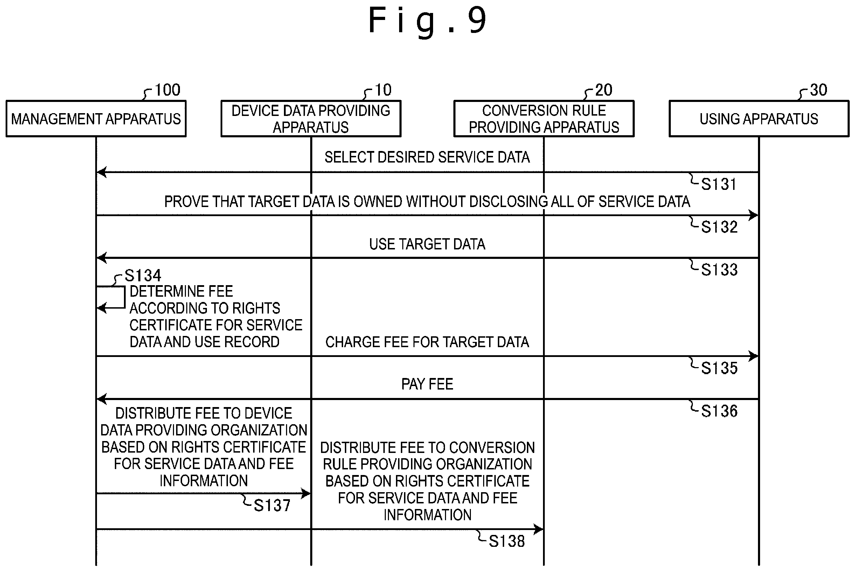

   Fig. 9 is a sequence diagram illustrating an example of distribution processing when service data is used according to the embodiment of the present disclosure.
[Fig. 10]

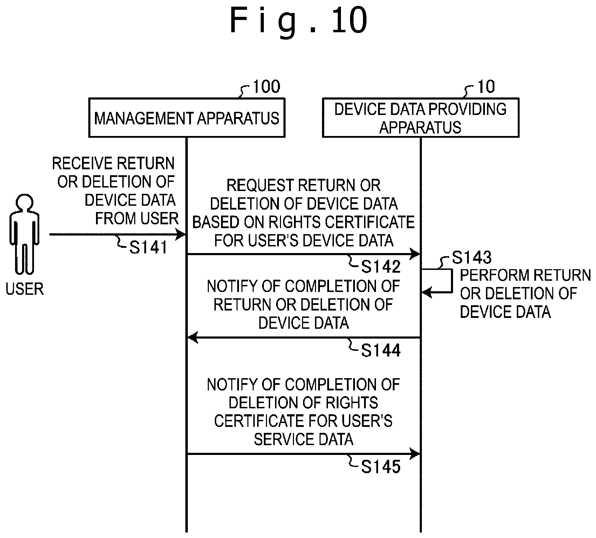

   Fig. 10 is a sequence diagram illustrating an example of deletion processing when returning or deleting device data according to the embodiment of the present disclosure.
[Fig. 11]

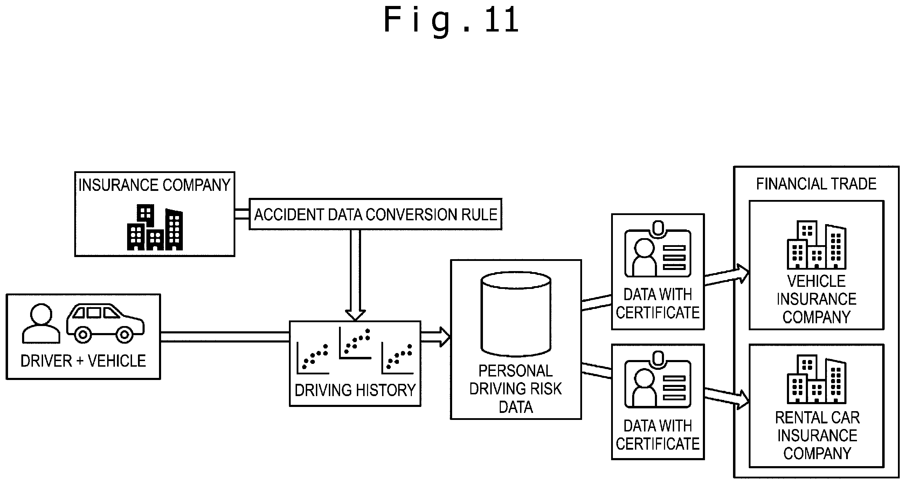

   Fig. 11 is a diagram illustrating an example of a data flow in use case UC11.
[Fig. 12]

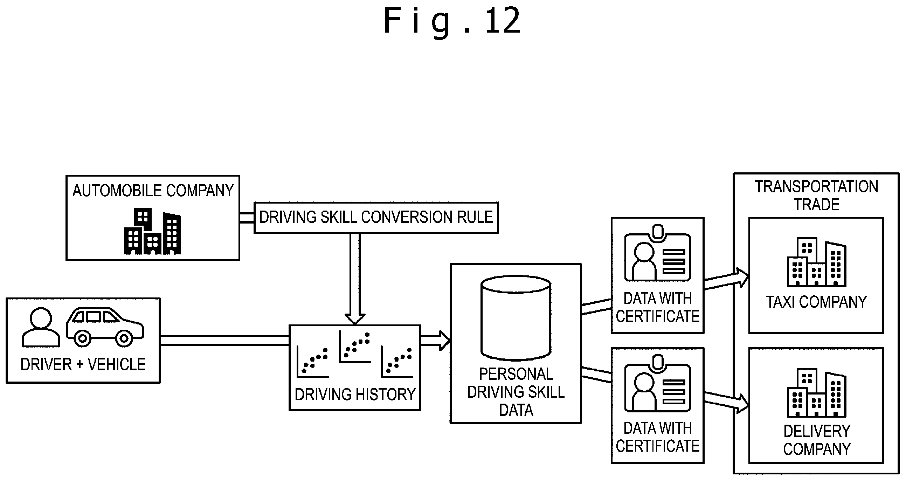

   Fig. 12 is a diagram illustrating an example of a data flow in use case UC12.
[Fig. 13]

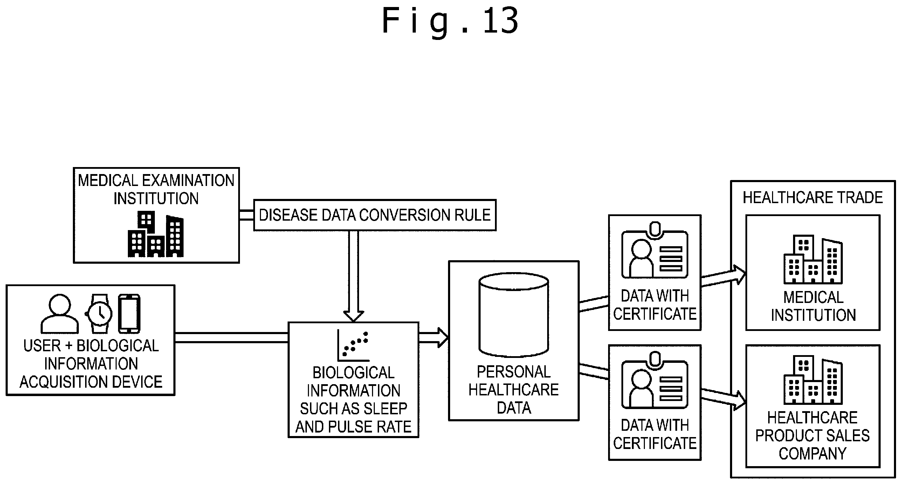

   Fig. 13 is a diagram illustrating an example of a data flow in use case UC13.
[Fig. 14]

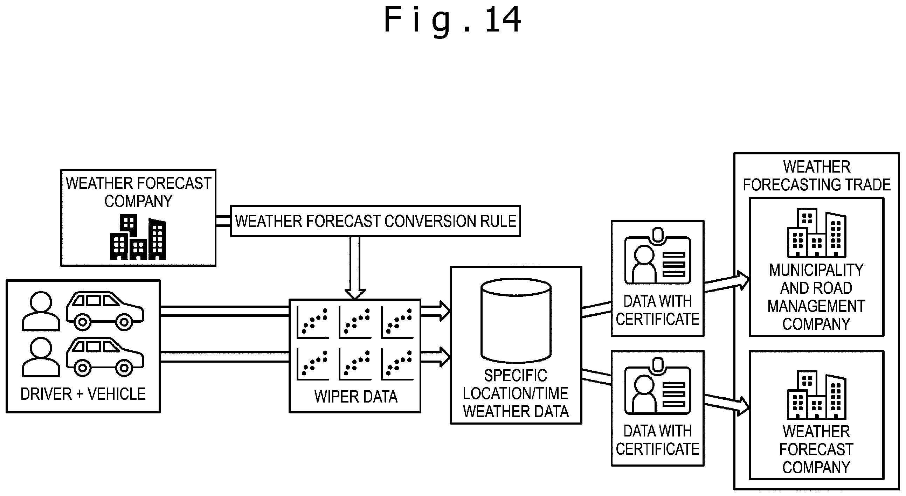

   Fig. 14 is a diagram illustrating an example of a data flow in use case UC21.
[Fig. 15]

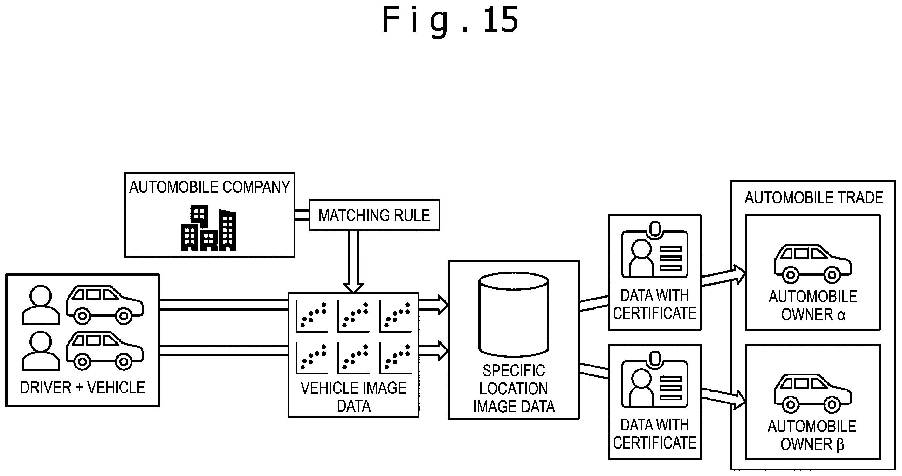

   Fig. 15 is a diagram illustrating an example of a data flow in use case UC22.
[Fig. 16]

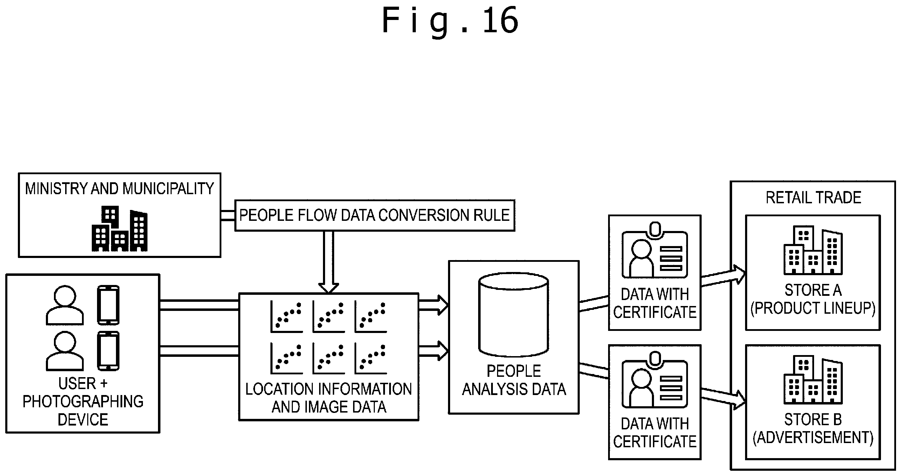

   Fig. 16 is a diagram illustrating an example of a data flow in use case UC23.
[Fig. 17]

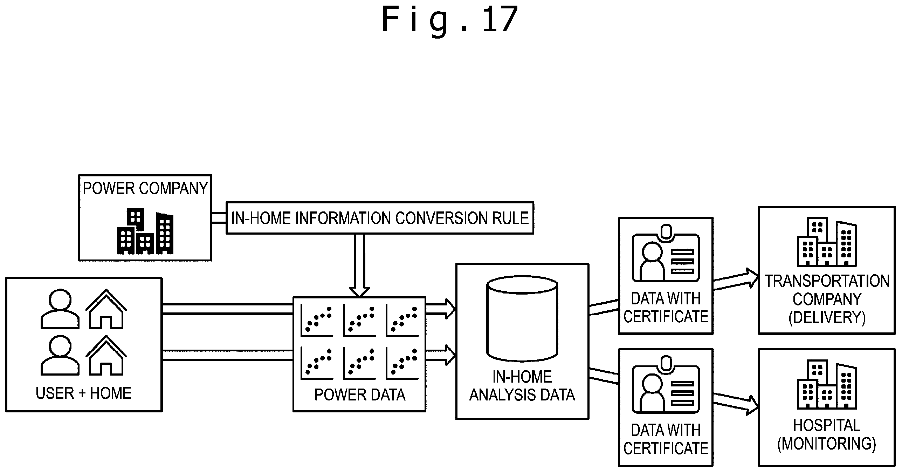

   Fig. 17 is a diagram illustrating an example of a data flow in use case UC24.
[Fig. 18]

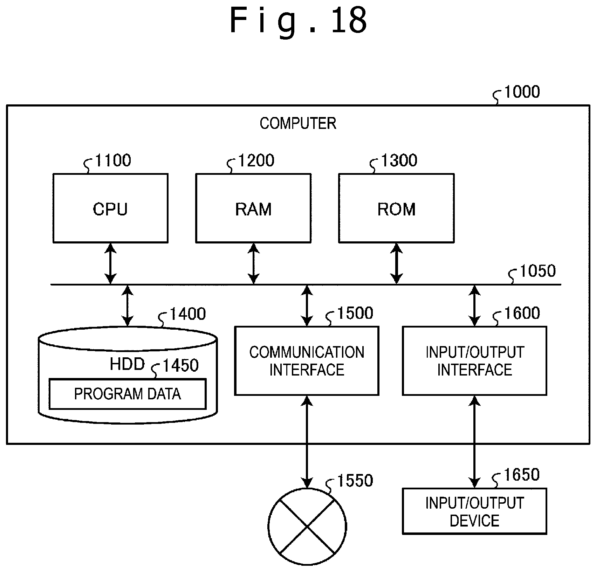

   Fig. 18 is a diagram of a hardware configuration illustrating an example of a computer that implements functions of an information processing apparatus.

### Description of Embodiments

Hereinafter, embodiments of the present disclosure will be described in detail with reference to the drawings. Note that, in the following embodiments, the same reference signs are assigned to identical components, and redundant descriptions will be omitted accordingly.

The present disclosure will be described in accordance with the following itemized order.
1. System Configuration According to Embodiment
2. Rights Management Processing Flow According to Embodiment
3. Configuration of Management Apparatus According to Embodiment
4. Information Processing Procedure According to Embodiment
5. Use Case
6. Modified Examples of Embodiment
7. Hardware Configuration
8. Effects

### Embodiment

### 1. System Configuration According to Embodiment

Fig. 1 is a diagram illustrating an example of a configuration of an information processing system according to an embodiment of the present disclosure. As illustrated in Fig. 1, an information processing system 1 includes a device data providing apparatus 10, a conversion rule providing apparatus 20, a using apparatus 30, and a management apparatus 100. The device data providing apparatus 10, the conversion rule providing apparatus 20, the using apparatus 30, and the management apparatus 100 are connected via a network N, for example, in a wired or wireless manner so as to be able to communicate with each other.

The device data providing apparatus 10 is an information processing apparatus that collects and manages device data, which is data related to use of a device, from the device used by a user who is a device user, in a device data providing organization. Note that the device data providing apparatus 10 includes in-vehicle devices such as an in-vehicle micro processing unit (MPU). The device data providing apparatus 10 may collect and manage device data from a plurality of users. The device data providing apparatus 10 provides the collected device data to the management apparatus 100 in a concealed (encrypted) state. The device data providing apparatus 10 receives a rights certificate for device data for each user from the management apparatus 100. The device data providing apparatus 10 distributes fees distributed from the management apparatus 100 to the users based on the rights certificates for the device data for the users, respectively.

The conversion rule providing apparatus 20 is an information processing apparatus that provides the management apparatus 100 with a conversion rule for converting device data according to a specific rule in a concealed (encrypted) state, in a conversion rule providing organization. Note that the conversion rule providing organization is an example of a first provider, and a plurality of conversion rule providing organizations are examples of a first provider and a second provider. The specific rule is an example of a first rule and a second rule. The conversion rule providing apparatus 20 receives a rights certificate for a conversion rule from the management apparatus 100. The conversion rule providing apparatus 20 receives a fee distributed from the management apparatus 100.

The using apparatus 30 is an information processing apparatus that uses service data, which is concealed conversion data generated by the management apparatus 100 based on the device data and the conversion rule, in a service data using organization. Note that a first user and a second user are examples of the service data using organization. The using apparatus 30 pays a fee corresponding to the service data used, for example, to the management apparatus 100.

The management apparatus 100 is an information processing apparatus that manages device data, conversion rules, service data, and fee information in the information processing system 1. The management apparatus 100 executes concealed computation together with the device data providing apparatus 10 and the conversion rule providing apparatus 20. Further, the management apparatus 100 issues and manages various certificates, such as rights certificates for device data, rights certificates for conversion rules, rights certificates for service data, and verification certificates to be attached to the service data. Note that the number of the device data providing apparatuses 10, the conversion rule providing apparatuses 20, and the using apparatuses 30 is not limited, and the information processing system 1 may include any number of the device data providing apparatuses 10, the conversion rule providing apparatuses 20, and the using apparatuses 30. Details of the management apparatus 100 will be described below.

Fig. 2 is a diagram illustrating an example of a data flow according to the embodiment of the present disclosure. As illustrated in Fig. 2, when the management apparatus 100 receives an instruction to start creating service data, the management apparatus 100 acquires a concealed conversion rule 21 from the conversion rule providing apparatus 20. The management apparatus 100 issues a rights certificate for the conversion rule 21 (included in a rights certificate 14 in Fig. 2) to the conversion rule providing apparatus 20. The management apparatus 100 acquires concealed device data 11 of a data type corresponding to the conversion rule 21 from the device data providing apparatus 10. The management apparatus 100 issues a rights certificate for the device data 11 (included in a rights certificate 13 in Fig. 2) to the device data providing apparatus 10.

The management apparatus 100 generates service data 12 based on the conversion rule 21 while keeping the device data 11 concealed. The management apparatus 100 issues rights certificates for service data corresponding to the service data 12 (included in the rights certificates 13 and 14 in Fig. 2) to the device data providing apparatus 10 and the conversion rule providing apparatus 20, respectively. The management apparatus 100 transmits the service data with a verification certificate to the using apparatus 30 of the data using organization. The using apparatus 30 pays data use fees 15 and 16 to the management apparatus 100. The management apparatus 100 pays the data use fees 15 and 16 to the device data providing apparatus 10 and the conversion rule providing apparatus 20, respectively, according to the rights certificates for the service data included in the rights certificates 13 and 14. Note that while Fig. 2 illustrates the data use fees 15 and 16 separately, the using apparatus 30 pays the data use fees 15 and 16 collectively to the management apparatus 100, and the data use fees 15 and 16 are distributed to the device data providing apparatus 10 and the conversion rule providing apparatus 20 according to rights allocation. The device data providing apparatus 10 further distributes the data use fee 15 to the device data providing organization to a plurality of users according to shares of the plurality of users who have provided the device data.

### 2. Rights Management Processing Flow According to Embodiment

Fig. 3 is a flowchart illustrating an example of rights management processing according to the embodiment of the present disclosure. Note that a description of encryption is omitted in the description in Fig. 3. As illustrated in Fig. 3, in the information processing system 1, the management apparatus 100 acquires a conversion rule from the conversion rule providing apparatus 20, and issues a rights certificate for the conversion rule to the conversion rule providing organization (step S1). At this time, the rights certificate for the conversion rule may be made to comply with a management method of a conversion rule management organization. The management apparatus 100 analyzes device data requested by the conversion rule acquired from the conversion rule providing apparatus 20 (step S2). The management apparatus 100 issues a rights certificate for the device data to a user who is a provider of the device data (step S3). At this time, the rights certificate for the device data may be made to comply with a management method of a device data management organization.

The management apparatus 100 generates service data based on analysis results of the device data requested by the conversion rule (step S4). The management apparatus 100 allocates rights to contributors to service data generation, such as the conversion rule providing organization and the device data providing organization including users, according to a degree of contribution to the service data generation (step S5). The management apparatus 100 issues rights certificates for the service data corresponding to the rights allocation.

When the service data using organization, that is, a user, uses the service data, the using apparatus 30 pays a predetermined fee to the management apparatus 100 (step S6). Note that the fee can be paid using a variety of payment methods, including but not limited to electronic money, cryptocurrency, tokens, and points. The management apparatus 100 distributes the paid fee to the contributors to service data generation based on the rights allocation (step S7). When the user requests return or deletion of the provided device data, the management apparatus 100 returns or deletes the device data and deletes the corresponding rights certificate and the rights allocation. That is, when there is a change in the rights allocation for the service data, the management apparatus 100 updates each rights certificate (step S8). In this manner, the management apparatus 100 can execute processing related to various rights as a credential infrastructure.

### 3. Configuration of Management Apparatus According to Embodiment

Fig. 4 is a block diagram illustrating an example of a functional configuration of the management apparatus according to the embodiment of the present disclosure. As illustrated in Fig. 4, the management apparatus 100 includes a display unit 101, an operation unit 102, a communication unit 110, a storage unit 120, and a control unit 130. Examples of the management apparatus 100 include a server and a personal computer.

The display unit 101 is a display device for displaying various types of information. The display unit 101 is achieved, for example, by a liquid crystal display or an organic electro luminescence (EL) display, as the display device. The display unit 101 displays various screens, such as management screens for device data, conversion rules, service data, and various rights certificates.

The operation unit 102 is an input device that receives various operations from an administrator who operates the management apparatus 100. The operation unit 102 is achieved, for example, by a keyboard, a mouse, or a touch panel, as the input device. The operation unit 102 receives, for example, input of various types of setting information. Note that the display device of the display unit 101 and the input device of the operation unit 102 may be integrated into one device, such as a display with a touch panel.

The communication unit 110 is achieved, for example, by a network interface card (NIC) or a wireless local area network (LAN) such as Wi-Fi (trade name). The communication unit 110 is a communication interface that is connected to the device data providing apparatus 10, the conversion rule providing apparatus 20, and the using apparatus 30 via the network N in a wired or wireless manner, and controls communication of information between the device data providing apparatus 10, the conversion rule providing apparatus 20, and the using apparatus 30. The communication unit 110 receives, for example, encrypted device data from the device data providing apparatus 10. The communication unit 110 receives, for example, encrypted conversion rules from the conversion rule providing apparatus 20. The communication unit 110 receives, for example, data use requests and information on data use fees from the using apparatus 30. The communication unit 110 transmits, for example, rights certificates for device data and information on data use fees to the device data providing apparatus 10. The communication unit 110 transmits, for example, analysis requests, rights certificates for conversion rules and information on data use fees to the conversion rule providing apparatus 20. The communication unit 110 transmits, for example, verification certificates, target data corresponding to data use requests, and billing information to the using apparatus 30.

The storage unit 120 is achieved, for example, by a semiconductor memory element such as a random access memory (RAM) or a flash memory, or a storage device such as a hard disk or an optical disk. The storage unit 120 includes a device data storage unit 121, a conversion rule storage unit 122, a service data storage unit 123, and a management information storage unit 124. The storage unit 120 stores information (programs and data) used in processing by the control unit 130.

The device data storage unit 121 stores encrypted device data acquired from the device data providing apparatus 10. The encrypted device data is data processed for secure computation (concealed computation) using, for example, secret sharing multi-party computation (MPC) together with the device data providing apparatus 10 and the conversion rule providing apparatus 20. That is, the device data storage unit 121 shares a portion of decentralized device data with the device data providing apparatus 10. In the following description, encryption may be referred to as decentralization. Note that homomorphic encryption may be used for secure computation.

The conversion rule storage unit 122 stores the encrypted conversion rules acquired from the conversion rule providing apparatus 20. The conversion rule storage unit 122 stores the encrypted conversion rules in association with a plurality of conversion rule providing organizations, respectively. The encrypted conversion rules are data processed for secure computation (concealed computation) using, for example, secret sharing MPC together with the device data providing apparatus 10 and the conversion rule providing apparatus 20. That is, the conversion rule storage unit 122 shares a portion of the decentralized conversion rules with the conversion rule providing apparatus 20. Note that homomorphic encryption may be used for secure computation.

The service data storage unit 123 stores generated service data. The service data is encrypted service data generated based on the encrypted (decentralized) device data and the conversion rules.

The management information storage unit 124 stores management information for various certificates, such as rights certificates for issued device data, rights certificates for conversion rules, rights certificates for service data, and verification certificates to be attached to the service data, fee information, and results of fee distribution. Note that the management information also includes an update history.

The control unit 130 is achieved, for example, by a central processing unit (CPU) or a micro processing unit (MPU) executing a program stored in an internal storage device using a RAM as a work area. The control unit 130 may be achieved by an integrated circuit such as an application-specific integrated circuit (ASIC) or a field programmable gate array (FPGA).

The control unit 130 includes an acquisition unit 131, a generation unit 132, a management unit 133, and a distribution unit 134, and implements or executes functions and operations of information processing described below. Note that an internal configuration of the control unit 130 is not limited to the configuration illustrated in Fig. 4, and may be any other configuration capable of executing information processing, which will be described below.

The acquisition unit 131 receives, from the administrator, a start of creating service data or a change of a conversion rule. Upon receiving the start or change of these, the acquisition unit 131 transmits an analysis request of the conversion rule to the conversion rule providing apparatus 20 via the network N and the communication unit 110, and receives and acquires information on a data type that requires rule conversion from the conversion rule providing apparatus 20. The acquisition unit 131 transmits the information on the data type that requires rule conversion to the device data providing apparatus 10 via the network N and the communication unit 110, and receives and acquires a data provision preparation completion notification indicating that data type matching has been completed.

Upon receiving the completion notification, the acquisition unit 131 receives a selection of service data that is permitted for creation from the user. Note that the acquisition unit 131 may receive the selection directly from the user or may receive the selection via the device data providing organization (the device data providing apparatus 10). The acquisition unit 131 may acquire selection information from the user indicating whether personally identifiable information can be provided. Upon receiving the selection of the service data, the acquisition unit 131 instructs the management unit 133 to start managing the service data including the user's device data and the rights certificate.

The acquisition unit 131 transmits a request for decentralization of the conversion rule to the conversion rule providing apparatus 20 via the network N and the communication unit 110, and receives and acquires rights regarding the conversion rule of the conversion rule providing organization and a decentralized conversion rule from the conversion rule providing apparatus 20. The acquisition unit 131 stores the acquired rights regarding the conversion rule of the conversion rule providing organization in the management information storage unit 124, and stores the decentralized conversion rule in the conversion rule storage unit 122. The acquisition unit 131 transmits a request for decentralization of the device data to the device data providing apparatus 10 via the network N and the communication unit 110, and receives and acquires rights regarding the device data of the user who is a device user and the decentralized device data from the device data providing apparatus 10. The acquisition unit 131 stores the acquired rights regarding the user's device data in the management information storage unit 124, stores the decentralized device data in the device data storage unit 121, and transmits the acquired rights regarding the user's device data and the decentralized device data to the device data providing apparatus 10.

When the acquisition unit 131 makes a request to decentralize the device data and a request to decentralize the conversion rule, the generation unit 132, together with the device data providing apparatus 10 and the conversion rule providing apparatus 20, executes secure computation (concealed computation) using secret sharing MPC or the like. That is, the generation unit 132 generates a portion of the decentralized device data and the decentralized conversion rule. The generation unit 132 stores, from among the decentralized device data and the decentralized conversion rule, data shared with the device data providing apparatus 10 and data shared with the conversion rule providing apparatus 20 in the device data storage unit 121 and the conversion rule storage unit 122, respectively.

When a generation instruction is input from the management unit 133, the generation unit 132 refers to the device data storage unit 121 and the conversion rule storage unit 122, and generates encrypted service data based on the decentralized device data and the decentralized conversion rule. The generation unit 132 stores the generated service data in the service data storage unit 123. Upon generating the service data, the generation unit 132 outputs to the management unit 133 an amount of data and a type of data provided by each user used in generating the service data. In addition, when a service data using organization, that is, a user, has a plurality of using apparatuses 30, the generation unit 132 generates encrypted service data corresponding to the data use requests received from the using apparatuses 30, respectively.

The management unit 133 generates and manages each rights certificate. When the decentralized device data is stored in the device data storage unit 121, the management unit 133 allocates rights for the device data to the rights certificate for the device data and the rights certificate for the conversion rule. The management unit 133 stores each rights certificate in the management information storage unit 124. Note that the rights certificate for the device data includes the allocation for each user and the allocation for the device data providing organization. When the rights certificate for the device data and the rights certificate for the conversion rule are changed, the management unit 133 stores a change history (update history) in the management information storage unit 124. When the rights allocation is completed, the management unit 133 outputs a generation instruction to the generation unit 132.

When the management unit 133 receives the amount of data and the type of data provided by each user from the generation unit 132, the management unit 133 determines a ratio of rights allocation based on the input amount of data and the input type of data provided by each user. That is, the management unit 133 determines the rights allocation of the fee for the use of the service data among each user, the device data providing organization, and the conversion rule providing organization. Upon determining the ratio of the rights allocation, the management unit 133 generates a rights certificate for the service data that can be verified by a third party and enables identification of the device data provided by each user and the rights allocation. For example, a zero-knowledge proof (ZKP) can be used as the rights certificate for the service data. The management unit 133 stores the generated rights certificate for the service data in the management information storage unit 124. Note that the rights certificate for the service data includes the rights allocation to the fee for the use of the service data among each user, the device data providing organization, and the conversion rule providing organization determined as described above. The management unit 133 stores and manages a change history (update history) of the rights certificate for the service data in the management information storage unit 124. The management unit 133 generates a verification certificate to be attached to the service data. For example, a ZKP can be used as the verification certificate.

Here, the rights allocation will be described with reference to Fig. 5. Fig. 5 is a diagram illustrating an example of rights allocation to generation contributors. As illustrated in Fig. 5, the generation contributors who have contributed to generation of service data include, for example, a conversion rule providing organization, a device data providing organization, and device users. As an example of the rights allocation, a fixed value of 50 % is allocated to the conversion rule providing organization, a fixed value of 10 % is allocated to the device data providing organization, and a variable value of 40 % in total is allocated to the device users. Note that the variable value for the device users indicates that the rights allocation to each user varies according to the number of users. For example, when there are two users, 40 % is further allocated to the two users, for example, 20 % each. For example, when there are four users, 40 % is further allocated to the four users, for example, 10 % each. Note that the rights allocation among users may vary according to an amount of data contributed. Further, when there is no one to whom the rights for the service data are allocated as a whole as a result of a change, the service data and the rights certificate may be invalidated.

Next, storage of a change history will be described with reference to Fig. 6. Fig. 6 is a diagram illustrating an example of management of a change history for a rights certificate for device data. As illustrated in Fig. 6, the rights certificate for the device data is associated with a personal identifier (e.g., ID = xyz) of a user who has provided the data. For example, when a conversion rule is changed, and a data type used for the device data provided by the user is changed, a rights share of the rights certificate for the device data is also changed, and the change history (update history) of the rights certificate for the device data is stored in the device data storage unit 121. At this time, the change history may be managed using, for example, a blockchain (BC) to ensure tamper resistance. The rights certificate for the device data may use a standard specification such as a verifiable credential (VC). For an identifier of a user, an organization, or the like used in each rights certificate, for example, a decentralized identity (DID) may be used, or a so-called digital wallet or the like may be used.

For each rights certificate, each time a rights management event such as new creation (acquisition), deletion (abandonment), update, addition, or use is detected, a change history is stored in the management information storage unit 124 as a change history (update history) using a blockchain. For each rights certificate, a change history of the rights processing from the perspective of the rights holder is managed in addition to a change history of the rights certificate itself by VC or the like, so that the rights certificate as an information asset is managed safely. Note that the change history of the rights processing may be stored in the rights certificate and managed in association with the rights certificate itself. Examples of the rights management event include acquisition of rights for service data, updates to service data, loss or abandonment of rights by a rights holder, updates to allocation between rights holders, and increases or decreases in the number of rights holders.

As the rights management event, for example, a case where return or deletion of the device data is received from the user is considered. In this case, the management unit 133 requests the device data providing apparatus 10 to return or delete the device data based on the rights certificate for the user's device data. The device data providing apparatus 10 performs the return or deletion of the device data and notifies the management apparatus 100 of completion of the return or deletion of the device data. When the management unit 133 of the management apparatus 100 is notified of the completion of the return or deletion of the device data, the management unit 133 deletes the rights certificate for the service data for the user stored in the management information storage unit 124, and notifies the device data providing apparatus 10 of completion of deletion of the user's rights certificate for the service data.

A description is made again on Fig. 4. The management unit 133 receives a selection of desired service data from the using apparatus 30 of the service data using organization, that is, the user. The management unit 133 proves to the using apparatus 30 that target data is owned without disclosing all of service data, for example, by using a rights certificate for the service data. When the management unit 133 receives a data use request from the using apparatus 30, the management unit 133 provides target service data corresponding to the data use request to the using apparatus 30. Note that when the management unit 133 acquires selection information from a user indicating whether personally identifiable information can be provided, the management unit 133 may provide the using apparatus 30 with the target data and information on the user for whom the selection information indicates that the personally identifiable information can be provided.

The management unit 133 determines a fee according to the rights certificate for the service data and a use record of the using apparatus 30. The management unit 133 charges the determined fee for the target data to the using apparatus 30. When the fee is paid by the using apparatus 30, the management unit 133 stores fee information in the management information storage unit 124 in association with the rights certificate for the service data. Upon storing the fee information in the management information storage unit 124, the management unit 133 outputs a distribution instruction to the distribution unit 134.

Upon receiving the distribution instruction from the management unit 133, the distribution unit 134 refers to the management information storage unit 124 and distributes the fee (incentive) to the device data providing apparatus 10 of a device data using organization based on the rights certificate for the service data and the fee information. The distribution unit 134 distributes the fee to the conversion rule providing apparatus 20 of the conversion rule providing organization based on the rights certificate for the service data and the fee information. Note that, when the distribution instruction is input from the management unit 133, the distribution unit 134 may automatically distribute these fees using a smart contract. The distribution unit 134 stores results of the fee distribution in the management information storage unit 124.

### 4. Information Processing Procedure According to Embodiment

Next, information processing according to the embodiment will be described with reference to Figs. 7 to 10. Fig. 7 is a sequence diagram illustrating an example of processing for combining a conversion rule according to the embodiment of the present disclosure.

The acquisition unit 131 of the management apparatus 100 receives from the administrator a start of creating service data or a change of a conversion rule (step S101). Upon receiving the start or change of these, the acquisition unit 131 transmits an analysis request of the conversion rule to the conversion rule providing apparatus 20 (step S102).

Upon receiving the analysis request from the management apparatus 100, the conversion rule providing apparatus 20 analyzes a data type that requires rule conversion, generates information on the data type that requires rule conversion, and transmits the information to the management apparatus 100 (step S103).

The acquisition unit 131 of the management apparatus 100 receives and acquires the information on the data type that requires rule conversion from the conversion rule providing apparatus 20, thereby sharing the information on the data type that requires rule conversion (step S104). The acquisition unit 131 transmits the information on the data type that requires rule conversion to the device data providing apparatus 10, and performs matching between the data type that requires rule conversion and a data type held by the device data providing organization (step S105).

Based on the received information on the data type that requires rule conversion, the device data providing apparatus 10 extracts data that requires rule conversion from the device data (step S106). That is, the device data providing apparatus 10 performs matching of data types. The device data providing apparatus 10 transmits a data provision preparation completion notification to the management apparatus 100, indicating that the matching of data types has been performed (step S107). The acquisition unit 131 of the management apparatus 100 receives and acquires the data provision preparation completion notification from the device data providing apparatus 10. Note that the management apparatus 100 may generate correlation data between the data type of the device data and the conversion rule based on the matching result of the data types. For example, when a data format of the device data is changed, the management apparatus 100 may change (update) association between the data type of the device data used for the service data and the conversion rule based on the correlation data. Thus, the management apparatus 100 can associate the data type of the device data used for the service data with the conversion rule.

Fig. 8 is a sequence diagram illustrating an example of processing for generating service data and a rights certificate according to the embodiment of the present disclosure.

The acquisition unit 131 of the management apparatus 100 receives a selection of service data that is permitted for creation from a user. Upon receiving the selection of the service data, the acquisition unit 131 instructs the management unit 133 to start managing the user's service data and the rights certificate. The management unit 133 starts managing the user's service data and the rights certificate (step S111). The acquisition unit 131 transmits a request for decentralization of a conversion rule to the conversion rule providing apparatus 20 (step S112).

Upon receiving the request for decentralization of the conversion rule, the conversion rule providing apparatus 20 notifies the management apparatus 100 of rights regarding the conversion rule of a conversion rule providing organization (step S113), decentralizes the conversion rule, and transmits the decentralized conversion rule to the management apparatus 100 (step S114).

The acquisition unit 131 of the management apparatus 100 receives and acquires the rights regarding the conversion rule of the conversion rule providing organization and the decentralized conversion rule from the conversion rule providing apparatus 20, thereby sharing the rights regarding the conversion rule of the conversion rule providing organization and the decentralized conversion rule (step S115). When sharing the rights regarding the conversion rule of the conversion rule providing organization and the decentralized conversion rule, the acquisition unit 131 transmits a request for decentralizing the device data to the device data providing apparatus 10 (step S116).

The device data providing apparatus 10 starts acquiring device data from the user using the device at any timing (step S117). When the device data providing apparatus 10 receives the request for decentralizing the device data, the device data providing apparatus 10 notifies the management apparatus 100 of the rights regarding the device data of the user, who is the device user (step S118), decentralizes the device data, and transmits the decentralized device data to the management apparatus 100 (step S119).

The acquisition unit 131 of the management apparatus 100 receives and acquires the rights regarding the device data of the user, who is the device user, from the device data providing apparatus 10, thereby sharing the rights regarding the device data of the user, who is the device user. The acquisition unit 131 receives and acquires the decentralized device data from the device data providing apparatus 10, thereby sharing the decentralized device data (step S120).

When the decentralized device data is shared, the management unit 133 allocates rights for the device data to the respective rights certificates (step S121). Note that the decentralization processing of the device data by the device data providing apparatus 10 and the rights allocation processing of the device data to the respective rights certificates in the management unit 133 of the management apparatus 100 may be performed simultaneously. When the rights allocation is completed, the management unit 133 outputs a generation instruction to the generation unit 132.

When the generation instruction is input from the management unit 133, the generation unit 132 refers to the device data storage unit 121 and the conversion rule storage unit 122, and generates encrypted service data based on the decentralized device data and the decentralized conversion rule (step S122). Upon generating the service data, the generation unit 132 outputs to the management unit 133 an amount of data and a type of data provided by each user used in generating the service data.

When the management unit 133 receives the amount of data and the type of data provided by each user from the generation unit 132, the management unit 133 determines a ratio of rights allocation based on the input amount of data and the input type of data provided by each user (step S123). Upon determining the ratio of the rights allocation, the management unit 133 generates a rights certificate for the service data that can be verified by a third party and enables identification of the device data provided by each user and the rights allocation (step S124). The management unit 133 stores and manages a change history (update history) of the rights certificate for the service data in the management information storage unit 124 (step S125). Thus, the management apparatus 100 can generate and manage the service data and each rights certificate.

Fig. 9 is a sequence diagram illustrating an example of distribution processing when service data is used according to the embodiment of the present disclosure.

The management unit 133 of the management apparatus 100 receives a selection of desired service data from the using apparatus 30 of the service data using organization (step S131). The management unit 133 proves to the using apparatus 30 that target data is owned without disclosing all of the service data, for example, by using a rights certificate for the service data (step S132).

The using apparatus 30 transmits a data use request for the desired data from among the service data to the management apparatus 100. When the management unit 133 of the management apparatus 100 receives the data use request from the using apparatus 30, the management unit 133 provides target data corresponding to the data use request to the using apparatus 30 (step S133). A verification certificate (a verification certificate to be attached to the service data) is attached to the target data.

The management unit 133 determines a fee according to the rights certificate for the service data and a use record of the using apparatus 30 (step S134). The management unit 133 charges the determined fee for the target data to the using apparatus 30 (step S135).

The using apparatus 30 pays the fee to the management apparatus 100 (step S136). Note that the using apparatus 30 may pay the fees to wallets (not illustrated) of the device data providing organization and the conversion rule providing organization.

When the fee is paid by the using apparatus 30, the management unit 133 of the management apparatus 100 stores fee information in the management information storage unit 124 in association with the rights certificate for the service data. Upon storing the fee information in the management information storage unit 124, the management unit 133 outputs a distribution instruction to the distribution unit 134.

Upon receiving the distribution instruction from the management unit 133, the distribution unit 134 refers to the management information storage unit 124 and distributes the fee to the device data providing apparatus 10 of the device data using organization based on the rights certificate for the service data and the fee information (step S137). The distribution unit 134 distributes the fee to the conversion rule providing apparatus 20 of the conversion rule providing organization based on the rights certificate for the service data and the fee information (step S138). The distribution unit 134 stores results of the fee distribution in the management information storage unit 124. Thus, the management apparatus 100 can distribute the fees corresponding to the use of the service data to the device data using organization and the conversion rule providing organization.

Fig. 10 is a sequence diagram illustrating an example of deletion processing when returning or deleting device data according to the embodiment of the present disclosure.

The management unit 133 of the management apparatus 100 receives return or deletion of the device data from a user (step S141). Upon receiving the return or deletion of the device data, the management unit 133 requests the device data providing apparatus 10 to return or delete the device data based on a rights certificate for the user's device data (step S142).

Upon receiving the request, the device data providing apparatus 10 performs the return or deletion of the user's device data (step S143), and notifies the management apparatus 100 of completion of the return or deletion of the device data (step S144).

When the management unit 133 of the management apparatus 100 is notified of the completion of the return or deletion of the device data, the management unit 133 deletes the rights certificate for the service data for the user stored in the management information storage unit 124. The management unit 133 notifies the device data providing apparatus 10 of completion of deletion of the rights certificate for the service data for the user (step S145). Thus, the management apparatus 100 can return or delete the device data from any user.

### 5. Use Case

Next, use cases using the information processing system according to the embodiment of the present disclosure will be described with reference to Figs. 11 to 17. Note that a flow of payment for a fee is omitted in descriptions of Figs. 11 to 17.

Fig. 11 is a diagram illustrating an example of a data flow in use case UC11. In use case UC11 illustrated in Fig. 11, the management apparatus 100 acquires, as device data, data on an automotive driver and a vehicle as an encrypted driving history. The management apparatus 100 acquires an encrypted accident data conversion rule from an insurance company. The management apparatus 100 generates personal driving risk data as encrypted service data based on the encrypted driving history and the encrypted accident data conversion rule. The management apparatus 100 receives selections of desired service data from, for example, a vehicle insurance company and a rental car insurance company, respectively, which are service data using organizations in the financial trade. The management apparatus 100 provides data with a certificate (personal driving risk data) as service data to the vehicle insurance company. The management apparatus 100 provides data with a certificate (personal driving risk data) as service data to the rental car insurance company. Note that the service data using organizations that receive the service data may belong to different industries or trades.

It has been difficult to capitalize a driving history because it is necessary to previously agree on confidentiality and a data management method between a driver and an insurance company, depending on a recipient of the service data. In contrast, in use case UC11, the management apparatus 100 can manage personal driving risk data as an asset. The management apparatus 100 can dynamically allocate rights according to an update to the accident data conversion rule. Furthermore, even when a data format of a non-public driving history is changed, the management apparatus 100 matches data types using the accident data conversion rule, so that the personal driving risk data can be generated. The management apparatus 100 may acquire selection information from a user indicating whether personally identifiable information can be provided, and provide the service data using organization with the service data and information on the user for whom the selection information indicates that the personally identifiable information can be provided. In this case, the management apparatus 100 can achieve a series of processes from providing the driver's driving history to receiving a fee, such as a reduction in automobile insurance premiums.

Fig. 12 is a diagram illustrating an example of a data flow in use case UC12. In use case UC12 illustrated in Fig. 12, the management apparatus 100 acquires, as device data, data on an automotive driver and a vehicle as an encrypted driving history. The management apparatus 100 acquires an encrypted driving skill conversion rule from an automobile company. The management apparatus 100 generates personal driving skill data as encrypted service data based on the encrypted driving history and the encrypted driving skill conversion rule. The management apparatus 100 receives selections of desired service data from, for example, a taxi company and a delivery company, which are service data using organizations in the transportation trade. The management apparatus 100 provides data with a certificate (personal driving skill data) as service data to the taxi company. The management apparatus 100 provides data with a certificate (personal driving skill data) as service data to the delivery company. Note that the service data using organizations that receive the service data may belong to different industries or trades.

It has been difficult to capitalize a driving history because it is necessary to previously agree on confidentiality and a data management method between a driver and an automobile company, depending on a recipient of the service data. In contrast, in use case UC12, the management apparatus 100 can manage personal driving skill data as an asset. The management apparatus 100 can dynamically allocate rights according to an update to the driving skill conversion rule. Furthermore, even when the data format of the non-public driving history is changed, the management apparatus 100 matches data types using the driving skill conversion rule, so that the personal driving skill data can be generated. The management apparatus 100 may acquire selection information from a user indicating whether personally identifiable information can be provided, and provide the service data using organization with the service data and information on the user for whom the selection information indicates that the personally identifiable information can be provided. In this case, the management apparatus 100 can achieve a series of processes from providing the driver's driving history to receiving a fee such as a usage fee.

Fig. 13 is a diagram illustrating an example of a data flow in use case UC13. In use case UC13 illustrated in Fig. 13, the management apparatus 100 acquires, as device data, user's biological information and data from a biological information acquisition device as encrypted biological information. The management apparatus 100 acquires an encrypted disease data conversion rule from a medical examination institution. The management apparatus 100 generates personal healthcare data as encrypted service data based on the encrypted biological information and the encrypted disease data conversion rule. The management apparatus 100 receives selections of desired service data from, for example, a medical institution and a healthcare product sales company, which are service data using organizations in the healthcare trade. The management apparatus 100 provides data with a certificate (personal healthcare data) as service data to the medical institution. The management apparatus 100 provides data with a certificate (personal healthcare data) as service data to the healthcare product sales company. Note that the service data using organizations that receive the service data may belong to different industries or trades.

It has been difficult to capitalize biological information because it is necessary to previously agree on confidentiality and a data management method between a user and a medical examination institution, depending on a recipient of the service data. In contrast, in use case UC13, the management apparatus 100 can manage personal healthcare data as an asset. The management apparatus 100 can dynamically allocate rights according to an update to the disease data conversion rule. Furthermore, even when a data format of non-public biological information is changed, the management apparatus 100 matches data types using the disease data conversion rule, so that the personal healthcare data can be generated. The management apparatus 100 may acquire selection information from a user indicating whether personally identifiable information can be provided, and provide the service data using organization with the service data and information on the user for whom the selection information indicates that the personally identifiable information can be provided. In this case, the management apparatus 100 can achieve a series of processes from providing the user's biological information to receiving a fee such as a discount on examination fee.

Fig. 14 is a diagram illustrating an example of a data flow in use case UC21. In use case UC21 illustrated in Fig. 14, the management apparatus 100 acquires, as device data, data on a plurality of automotive drivers and vehicles as encrypted wiper data. The management apparatus 100 acquires an encrypted weather forecast conversion rule from a weather forecast company. The management apparatus 100 generates specific location/time weather data as encrypted service data based on the encrypted wiper data and the encrypted weather forecast conversion rule. The management apparatus 100 receives selections of desired service data from, for example, a municipality and a road management company and a weather forecast company, which are service data using organizations in the weather forecasting trade. The management apparatus 100 provides data with a certificate (specific location/time weather data) as service data to the municipality and the road management company. The management apparatus 100 provides data with a certificate (specific location/time weather data) as service data to the weather forecast company. Note that the service data using organizations that receive the service data may belong to different industries or trades.

It has been difficult to capitalize wiper data because it is necessary to previously agree on confidentiality and a data management method between drivers and a weather forecast company, depending on a recipient of the service data. In contrast, in use case UC21, the management apparatus 100 can manage the specific location/time weather data as an asset. The management apparatus 100 can dynamically allocate rights according to an update to the weather forecast conversion rule. Furthermore, even when a data format of non-public wiper data is changed, the management apparatus 100 matches data types using the weather forecast conversion rule, so that the specific location/time weather data can be generated.

Fig. 15 is a diagram illustrating an example of a data flow in use case UC22. In use case UC22 illustrated in Fig. 15, the management apparatus 100 acquires, as device data, data on a plurality of automotive drivers and vehicles as encrypted vehicle image data. Note that the vehicle image data is, for example, still images or videos captured by an imaging device installed in each vehicle. The management apparatus 100 acquires an encrypted matching rule from an automobile company. The management apparatus 100 generates specific location image data as encrypted service data based on the encrypted vehicle image data and the encrypted matching rule. The management apparatus 100 receives selections of desired service data, for example, from automobile owners α and β, who are service data using organizations in the automobile trade. The management apparatus 100 provides data with a certificate (specific location image data) as service data to the automobile owner α. The management apparatus 100 provides data with a certificate (specific location image data) as service data to the automobile owner β. Note that the service data using organizations that receive the service data may belong to different industries or trades.

It has been difficult to capitalize vehicle image data because it is necessary to previously agree on confidentiality and a data management method between drivers and an automobile company, depending on a recipient of the service data. In contrast, in use case UC22, the management apparatus 100 can manage the specific location image data as an asset. The management apparatus 100 can dynamically allocate rights according to an update to the matching rule. Further, even when a data format of non-public vehicle image data is changed, the management apparatus 100 matches data types using the matching rule, so that the specific location image data can be generated.

Fig. 16 is a diagram illustrating an example of a data flow in use case UC23. In use case UC23 illustrated in Fig. 16, the management apparatus 100 acquires, as device data, data on a plurality of users and photographing devices as encrypted location information and image data. Note that the image data is, for example, still images or videos captured by each photographing device. The management apparatus 100 acquires an encrypted people flow data conversion rule from a ministry and a municipality. The management apparatus 100 generates people analysis data as encrypted service data based on the encrypted location information and image data and the encrypted people flow data conversion rule. The management apparatus 100 receives selections of desired service data from, for example, stores A and B, which are service data using organizations in the retail trade. Note that it is assumed that store A uses service data related to product lineup, and store B uses service data related to advertisement. The management apparatus 100 provides data with a certificate (people analysis data) as service data to store A. The management apparatus 100 provides data with a certificate (people analysis data) as service data to store B. Note that the service data using organizations that receive the service data may belong to different industries or trades.

It has been difficult to capitalize location information and image data because it is necessary to previously agree on confidentiality and a data management method between users and a ministry and a municipality, depending on a recipient of the service data. In contrast, in use case UC23, the management apparatus 100 can manage the people analysis data as an asset. The management apparatus 100 can dynamically allocate rights according to an update to the people flow data conversion rule. Furthermore, even when a data format of non-public location information and image data is changed, the management apparatus 100 matches data types using the people flow data conversion rule, so that the people analysis data can be generated.

Fig. 17 is a diagram illustrating an example of a data flow in use case UC24. In use case UC24 illustrated in Fig. 17, the management apparatus 100 acquires, as device data, data on a plurality of users and powers in homes thereof as encrypted power data. Note that the power data is, for example, an amount of power consumption per hour. The management apparatus 100 acquires an encrypted in-home information conversion rule from a power company. The management apparatus 100 generates in-home analysis data as encrypted service data based on the encrypted power data and the encrypted in-home information conversion rule. The management apparatus 100 receives selections of desired service data from, for example, a transportation company and a hospital, which are service data using organizations in different industries. Note that it is assumed that the transportation company uses service data related to delivery, and the hospital uses service data related to emergency care in a certain area or service data related to monitoring of patients receiving home medical care, for example. The management apparatus 100 provides data with a certificate (in-home analysis data) as service data to the transportation company. The management apparatus 100 provides data with a certificate (in-home analysis data) as service data to the hospital. Note that the service data using organizations that receive the service data may belong to different trades.

It has been difficult to capitalize power data because it is necessary to previously agree on confidentiality and a data management method between users and a power company depending on a recipient of the service data. In contrast, in use case UC24, the management apparatus 100 can manage the in-home analysis data as an asset. The management apparatus 100 can dynamically allocate rights according to an update to the in-home information conversion rule. Furthermore, even when a data format of non-public power data is changed, the management apparatus 100 matches data types using the in-home information conversion rule, so that the in-home analysis data can be generated.

### 6. Modified Examples of Embodiment

The processing according to the above-described embodiment may be carried out in various different forms other than the above-described embodiment.

In addition, the processing procedures, specific names, and information including various data and parameters described in the above document and drawings can be arbitrarily changed unless otherwise specified. For example, the various types of information illustrated in the drawings are not limited to the illustrated information.

The components of the devices illustrated in the drawings are functionally conceptual and are not necessarily physically configured as illustrated in the drawings. That is, specific embodiments of distribution and integration of the respective apparatuses are not limited to those illustrated in the drawings, and all or part of each apparatus can be functionally or physically distributed or integrated in any unit according to various loads, usage conditions, or the like. For example, in the management apparatus 100, the functions of the management unit 133, such as receiving a data use request, providing target data, and determining allocation of a fee, may be decentralized.

The embodiments and the modified examples described above can be combined as appropriate as long as the processing content does is not contradictory.

### 7. Hardware Configuration

An information apparatus such as the management apparatus 100 according to each of the above-described embodiments is achieved, for example, by a computer 1000 with a configuration as illustrated in Fig. 18. The following description will use the management apparatus 100, which is an information processing apparatus according to the embodiment, as an example. Fig. 18 is a diagram of a hardware configuration illustrating an example of a computer that implements functions of an information processing apparatus. The computer 1000 includes a CPU 1100, a RAM 1200, a read only memory (ROM) 1300, a hard disk drive (HDD) 1400, a communication interface 1500, and an input/output interface 1600. The units of the computer 1000 are connected together via a bus 1050.

The CPU 1100 operates based on a program stored in the ROM 1300 or the HDD 1400, and controls each unit. For example, the CPU 1100 deploys programs stored in the ROM 1300 or the HDD 1400 to the RAM 1200 and executes processing corresponding to the various programs.

The ROM 1300 stores a boot program such as a basic input output system (BIOS) executed by the CPU 1100 at the time of activation of the computer 1000, a program depending on hardware of the computer 1000, and the like.

The HDD 1400 is a computer-readable recording medium that non-temporarily records programs executed by the CPU 1100, and data and the like used by the programs. Specifically, the HDD 1400 is a recording medium that stores an information processing program according to the present disclosure, which is an example of program data 1450.

The communication interface 1500 is an interface for the computer 1000 to connect to an external network 1550 (for example, the Internet). For example, the CPU 1100 receives data from another apparatus and transmits data generated by the CPU 1100 to another apparatus via the communication interface 1500.

The input/output interface 1600 is an interface for connecting an input/output device 1650 and the computer 1000. For example, the CPU 1100 receives data from an input device such as a keyboard or a mouse via the input/output interface 1600. The CPU 1100 also transmits data to an output device such as a display, speakers, printer, or the like via the input/output interface 1600. The input/output interface 1600 may function as a media interface that reads a program or the like recorded in a predetermined recording medium (media). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, when the computer 1000 functions as the management apparatus 100 according to the embodiment, the CPU 1100 of the computer 1000 executes the information processing program loaded onto the RAM 1200 to implement the functions of the acquisition unit 131 and the like. The HDD 1400 stores the information processing program according to the present disclosure and the data in the device data storage unit 121 and the like. Note that the CPU 1100 reads the program data 1450 from the HDD 1400 and executes the program, but in another example, the CPU 1100 may acquire these programs from another device via the external network 1550.

### 8. Effects

An information processing apparatus (management apparatus 100) includes an acquisition unit 131, a generation unit 132, and a management unit 133. The acquisition unit 131 acquires encrypted device data of a device used by a user, and acquires from a first provider an encrypted first conversion rule for converting the device data according to a first rule. The generation unit 132 generates encrypted first conversion data based on the acquired device data and the acquired first conversion rule. The management unit 133 associates the generated first conversion data with the user and the first provider and manages use and a fee of the first conversion data. As a result, the user's device data and the conversion rule can be combined in a confidential state and utilized as a personal information asset.

Upon receiving a data use request from a first user, the management unit 133 provides the first user with target data corresponding to the data use request from among the first conversion data. As a result, the data that the first user, who is a service using organization, desires to use can be provided.

The management unit 133 determines allocation of a fee obtained from the first user to the user and the first provider based on the provided target data. As a result, it is possible to determine the allocation of the fee corresponding to the use of the target data to a device data providing organization related to the user and the first provider that is a conversion rule providing organization.

The management unit 133 manages an allocation history of a fee in association with the user and the first provider. As a result, the allocation history of the fee for both the user and the first provider can be recorded.

The acquisition unit 131 acquires from a second provider an encrypted second conversion rule for converting the device data according to a second rule. As a result, a plurality of conversion rules acquired from a plurality of conversion rule providing organizations can be used. In addition, the device data and the conversion rules can be dynamically combined.

The generation unit 132 generates encrypted second conversion data based on the device data and the second conversion rule. As a result, it is possible to provide target data corresponding to the plurality of conversion rules acquired from the plurality of conversion rule providing organizations.

The management unit 133 associates the generated second conversion data with the user and the second provider, and manages use and a fee of the second conversion data. As a result, the user's device data and the plurality of conversion rules can be combined in a confidential state and utilized as a personal information asset.

Upon receiving a data use request from the second user, the management unit 133 provides the second user with target data corresponding to the data use request from among the second conversion data. As a result, data that a plurality of service using organizations desire to use can be provided separately.

The management unit 133 determines allocation of a fee obtained from the second user to the user and the second provider based on the provided target data. As a result, the fee corresponding to the use of the service data obtained from the plurality of service using organizations can be distributed to the device data using organization associated with the user and the plurality of conversion rule providing organizations.

The generation unit 132 generates at least one of the first conversion data and the second conversion data in response to a data use request received from at least one of the first user and the second user. As a result, data that one or more service using organizations desire to use can be provided.

Device data is acquired from a device used by a single user. As a result, target data corresponding to the user's device data can be provided.

The device data is acquired from a plurality of devices used by a plurality of users, respectively. As a result, target data reflecting the device data of the respective plurality of users can be provided.

The first user and the second user are users in different industries. As a result, data can be provided to a wider range of users.

The information processing apparatus further includes a distribution unit 134 that distributes the fee to the user and the first provider according to the determined allocation. As a result, the fee corresponding to the use of the target data can be distributed to the device data providing organization related to the user and the first provider that is the conversion rule providing organization.

The acquisition unit 131 acquires selection information from the user indicating whether personally identifiable information can be provided. The management unit 133 provides the first user with information on a user having the providable selection information together with the target data. As a result, a series of processes can be achieved, from providing the user's device data to receiving the fee that benefits the user in the service using organization.

Note that the effects described herein are merely examples and are not limited, and other effects may be produced.

Note that the present disclosure may also be configured as follows.
(1) An information processing apparatus including: an acquisition unit configured to acquire encrypted device data of a device used by a user, and acquire from a first provider an encrypted first conversion rule for converting the device data according to a first rule; a generation unit configured to generate encrypted first conversion data, based on the acquired device data and the acquired first conversion rule; and a management unit configured to associate the generated first conversion data with the user and the first provider, and manage use and a fee of the first conversion data.
(2) The information processing apparatus according to (1), in which when the management unit receives a data use request from a first user, the management unit provides the first user with target data corresponding to the data use request from among the first conversion data.
(3) The information processing apparatus according to (2), in which the management unit determines allocation of a fee obtained from the first user to the user and the first provider, based on the provided target data.
(4) The information processing apparatus according to (3), in which the management unit manages an allocation history of the fee in association with the user and the first provider.
(5) The information processing apparatus according to any one of (2) to (4), in which the acquisition unit acquires from a second provider an encrypted second conversion rule for converting the device data according to a second rule.
(6) The information processing apparatus according to (5), in which the generation unit generates encrypted second conversion data, based on the device data and the second conversion rule.
(7) The information processing apparatus according to (6), in which the management unit associates the generated second conversion data with the user and the second provider, and manages use and a fee of the second conversion data.
(8) The information processing apparatus according to (6) or (7), in which when the management unit receives a data use request from a second user, the management unit provides the second user with target data corresponding to the data use request from the among second conversion data.
(9) The information processing apparatus according to (8), in which the management unit determines allocation of a fee obtained from the second user to the user and the second provider, based on the provided target data.
(10) The information processing apparatus according to (8), in which the generation unit generates at least one of the first conversion data and the second conversion data corresponding, in response to the data use request received from at least one of the first user and the second user.
(11) The information processing apparatus according to any one of (1) to (10), in which the device data is acquired from the device used by the user being one person.
(12) The information processing apparatus according to any one of (1) to (10), in which the device data is acquired from a plurality of the devices used by a plurality of the users, respectively.
(13) The information processing apparatus according to any one of (8) to (10), in which the first user and the second user are users in different industries.
(14) The information processing apparatus according to (3) or (4), further including a distribution unit configured to distribute the fee to the user and the first provider according to the determined allocation.
(15) The information processing apparatus according to any one of (2) to (4), in which the acquisition unit acquires selection information from the user indicating whether personally identifiable information can be provided, and the management unit provides the first user with the target data and information on the user for whom the selection information indicates that the personally identifiable information can be provided.
(16) An information processing method for causing a computer to execute processing of: acquiring encrypted device data of a device used by a user, and acquiring from a first provider an encrypted first conversion rule for converting the device data according to a first rule; generating encrypted first conversion data, based on the acquired device data and the acquired first conversion rule; and associating the generated first conversion data with the user and the first provider, and managing use and a fee of the first conversion data.
(17) An information processing program for causing a computer to execute processing of: acquiring encrypted device data of a device used by a user, and acquiring from a first provider an encrypted first conversion rule for converting the device data according to a first rule; generating encrypted first conversion data, based on the acquired device data and the acquired first conversion rule; and associating the generated first conversion data with the user and the first provider, and managing use and a fee of the first conversion data.

### Reference Signs List

1 Information processing system
10 Device data providing apparatus
20 Conversion rule providing apparatus
30 Using apparatus
100 Management apparatus
101 Display unit
102 Operation unit
110 Communication unit
120 Storage unit
121 Device data storage unit
122 Conversion rule storage unit
123 Service data storage unit
124 Management information storage unit
130 Control unit
131 Acquisition unit
132 Generation unit
133 Management unit
134 Distribution unit
N Network

## Claims

1. An information processing apparatus comprising:
an acquisition unit configured to acquire encrypted device data of a device used by a user, and acquire from a first provider an encrypted first conversion rule for converting the device data according to a first rule;
a generation unit configured to generate encrypted first conversion data, based on the acquired device data and the acquired first conversion rule; and
a management unit configured to associate the generated first conversion data with the user and the first provider, and manage use and a fee of the first conversion data.

2. The information processing apparatus according to claim 1, wherein
when the management unit receives a data use request from a first user, the management unit provides the first user with target data corresponding to the data use request from among the first conversion data.

3. The information processing apparatus according to claim 2, wherein
the management unit determines allocation of a fee obtained from the first user to the user and the first provider, based on the provided target data.

4. The information processing apparatus according to claim 3, wherein
the management unit manages an allocation history of the fee in association with the user and the first provider.

5. The information processing apparatus according to claim 2, wherein
the acquisition unit acquires from a second provider an encrypted second conversion rule for converting the device data according to a second rule.

6. The information processing apparatus according to claim 5, wherein
the generation unit generates encrypted second conversion data, based on the device data and the second conversion rule.

7. The information processing apparatus according to claim 6, wherein
the management unit associates the generated second conversion data with the user and the second provider, and manages use and a fee of the second conversion data.

8. The information processing apparatus according to claim 6, wherein
when the management unit receives a data use request from a second user, the management unit provides the second user with target data corresponding to the data use request from among the second conversion data.

9. The information processing apparatus according to claim 8, wherein
the management unit determines allocation of a fee obtained from the second user to the user and the second provider, based on the provided target data.

10. The information processing apparatus according to claim 8, wherein
the generation unit generates at least one of the first conversion data and the second conversion data corresponding, in response to the data use request received from at least one of the first user and the second user.

11. The information processing apparatus according to claim 1, wherein
the device data is acquired from the device used by the user being one person.

12. The information processing apparatus according to claim 1, wherein
the device data is acquired from a plurality of the devices used by a plurality of the users, respectively.

13. The information processing apparatus according to claim 8, wherein
the first user and the second user are users in different industries.

14. The information processing apparatus according to claim 3, further comprising:
a distribution unit configured to distribute the fee to the user and the first provider according to the determined allocation.

15. The information processing apparatus according to claim 2, wherein
the acquisition unit acquires selection information from the user indicating whether personally identifiable information can be provided, and
the management unit provides the first user with the target data and information on the user for whom the selection information indicates that the personally identifiable information can be provided.

16. An information processing method for causing a computer to execute processing of:
acquiring encrypted device data of a device used by a user, and acquire from a first provider an encrypted first conversion rule for converting the device data according to a first rule;
generating encrypted first conversion data, based on the acquired device data and the acquired first conversion rule; and
associating the generated first conversion data with the user and the first provider, and managing use and a fee of the first conversion data.

17. An information processing program for causing a computer to execute processing of:
acquiring encrypted device data of a device used by a user, and acquiring from a first provider an encrypted first conversion rule for converting the device data according to a first rule;
generating encrypted first conversion data, based on the acquired device data and the acquired first conversion rule; and
associating the generated first conversion data with the user and the first provider, and managing use and a fee of the first conversion data.
